# EUROPÄISCHE PATENTANMELDUNG

(11) **EP 2 273 429 A1**
(43) Veröffentlichungstag der Anmeldung: **12.01.2011**
(21) Anmeldenummer: 09008813.9
(22) Anmeldetag: 06.07.2009
(51) Int. Cl.: G06Q 10/00, A45F 5/00, G05B 19/409, G06F 1/16

(54) **Weltweit einsetzbares multimediales Kommunikations- und Unterstützungssystem für Montage, Inspektion, Wartung und Reparatureinsätze in technischen Anlagen und Verfahren**

(71) Anmelder: SIEMENS AKTIENGESELLSCHAFT, 80333 München (DE)
(72) Erfinder: Arndt, Frank, Dr., 13581 Berlin (DE); Brummel, Hans-Gerd, Dr., 13465 Berlin (DE); Heblinski, Volker, 16548 Glienicke (DE); Paschmann, Willi, 10965 Berlin (DE); Reimann, Christian, Dr., 33154 Salzkotten (DE); Santelmann, Holger, 33106 Paderborn-Elsen (DE); Schmidt, Olaf, 15370 Vogelsdorf (DE); Weber, Dietmar, 12687 Berlin (DE)

(57) **Zusammenfassung**

Bisherige ferngesteuerte Systeme zur Unterstützung von Technikern vor Ort bieten nicht ausreichende Unterstützungsmöglichkeiten. Durch die Vorrichtung mit einem Kompetenzzentrum mit verschiedenen Transmittern und Receivern und einem Computer vor Ort, der ein multimediales System zur Untersuchung aufweist, wird die Unterstützung verbessert und deutlich schneller.

## Beschreibung

Die Erfindung betrifft ein weltweit einsetzbares multimediales Kommunikations- und Unterstützungssystem für Einsätze bei Montage, Inspektion, Wartung oder Reparatur von technischen Anlagen und ein Verfahren.

Bei Montage, Inspektionen, Wartungs- oder Reparatureinsätzen von technischen Anlagen in der gesamten Welt wird oft die Unterstützung von technischen Experten benötigt, die nicht ständig vor Ort sein oder deren Anreise zu lange dauern könnte.

Es ist daher Aufgabe der Erfindung, o.g. Problem zu lösen.

Die Aufgabe wird gelöst durch eine Vorrichtung Verfahren und ein Verfahren gemäß Anspruch 1 und 15.

In den Unteransprüchen zu der Vorrichtung und dem Verfahren sind weitere vorteilhafte Maßnahmen aufgelistet, die beliebig miteinander kombiniert werden können, um weitere Vorteile zu erzielen.

Es zeigen:
- Figur 1: schematisch eine Vorrichtung für ein solches multi- mediales System,
- Figur 2: Gasturbine einer technischen Anlage.

Die Zeichnungen und die Beschreibungen stellen nur Ausführungsbeispiele der Erfindung dar.

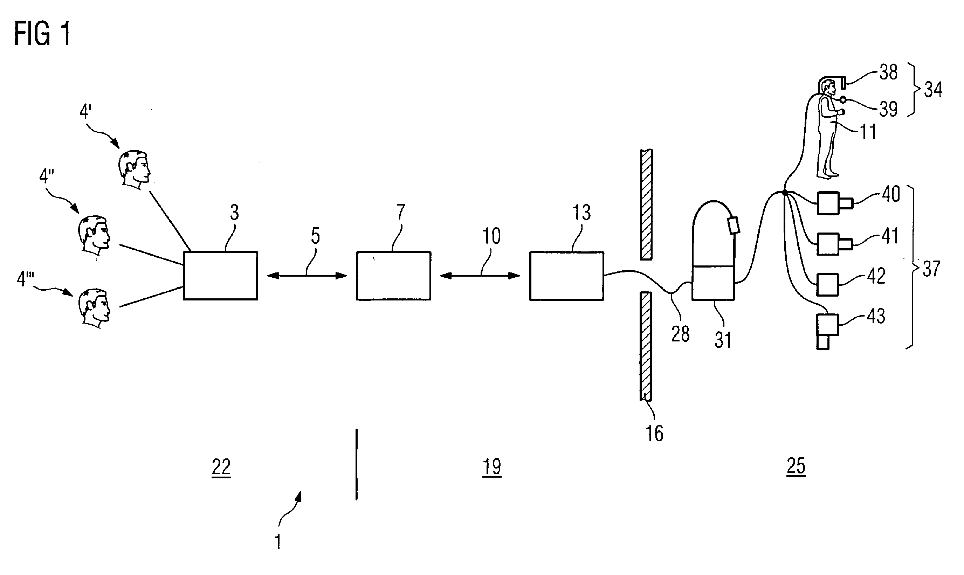

Figur 1 zeigt eine Vorrichtung 1.
Die Vorrichtung 1 weist auf ein Kompetenzzentrum 3 in der Welt 22 oder mehrere solcher Kompetenzzentren 3 mit zumindest einem, insbesondere mehreren Mitarbeiter als Spezialisten 4', 4", 4"', die komplexe Maschinen und Schäden an Maschinen 25 begutachten und Anweisungen geben können. Diese Kompetenzzentren 3 können darüber hinaus Wissen und Erfahrungen mit anderen Spezialisten 4", 4"' weltweit 22 direkt an deren Arbeitsplätzen außerhalb des Kompetenzzentrums 3 über alle möglichen Kommunikationsmittel wie Telefon, Video, Internet etc. austauschen (nicht dargestellt).

Von dem vorzugsweise einem Kompetenzzentrum 3 aus können Information gebündelt über eine globale Verbindung 5 weitergeleitet werden.
In den Kompetenzzentren 3 sind die technischen Vorrausetzungen für eine vernetzte Kommunikation (Internet, Satellitenkommunikation etc.) für die globale Verbindung 5 gegeben. Computer sowie Großbildschirme zur Verfolgung der Arbeiten an der Maschine 25 sind installiert.

Die Kommunikation mit dem Monteur 11 vor Ort, das heißt auf dem Betriebsgelände 19 oder nahe oder in bzw. an der Maschine 25 wie z.B. eine Gasturbine 100, die auf dem Betriebsgelände 19 steht - 22 oder das Kompetenzzentrum 3 ist nicht auf dem Betriebsgelände 19 oder nahe der Maschine 25 - und wo die oben beschriebenen Montage-, Wartungs- und Reparaturarbeiten oder auch Schadensanalysen sowie weitere Aktivitäten, die der Unterstützung bedürfen, durchgeführt werden, wird realisiert mittels einem mobilen Haupt-Transmitter/Receiver 7 für einen oder mehrere der folgenden Kommunikationswege für die globale Verbindung 5 zum Kompetenzzentrum 3:
- Satellitenkommunikation
- Internet
- sichere, getunnelte Internetverbindungen
- Telefon
- Common Remote Service Platform, sichere Internetverbindung der Firma.

Der Haupt-Transmitter/Receiver 7 weist vorzugsweise einen Satellitenempfänger/sender auf.
Das hier beschriebene Verfahren ist nicht auf diese aufgelisteten Kommunikationsmöglichkeiten beschränkt, sondern ist aufgrund seines modularen Aufbaus hervorragend dafür geeignet, auch neue, in Entwicklung befindliche oder auch völlig neue, zukünftige Kommunikationsverfahren anzuwenden.
Die Kommunikation über die globale Verbindung 5 erfolgt vorzugsweise mittels einer globalen Zwei-Wege-Verbindung.

Der Haupt-Transmitter/Receiver 7 kann direkt mit dem Computer 31 verbunden sein.

Zwischen Haupt-Transmitter/Receiver 7 und einem Computer 31 (der in der Zeichnung nur größer dargestellt ist), den der Monteur 11 vor Ort 25 mit sich trägt, gibt es vorzugsweise eine direkte oder eine erste Lokalverbindung 10 zu einem weiteren Lokal-Transmitter/Receiver 13.
Die Einheit 13 ist vorzugsweise kabellos 10 (wireless) mit dem Haupt-Transmitter/Receiver 7 verbunden. Andere Verbindungstechnologien sind denkbar.

Von dem Lokal-Transmitter/Receiver 13 oder von dem Haupt-Transmitter/Receiver 7 gibt es eine Verbindung zum Computer 31. Diese kann drahtlos erfolgen oder durch eine zweite Lokalverbindung 28 als Drahtleitung bzw. andere Informationsleiter wie Glasfaserkabel, als Kombination von Funk und Drahtleitung oder auch durch alle anderen Datenverbindungen, die in der Lage sind, metallische Umschließungen zu durchdringen. Damit ist auch ein Einsatz möglich in metallisch ausgeführten, großtechnischen Behältern, insbesondere in Dampfturbinengehäusen oder in Brennkammern in denen drahtlose Kommunikation nicht eingesetzt werden kann. An den vom Monteur 11 "am Mann" zu tragenden Computer 31 sind folgende Vorraussetzungen realisiert, die von Standardcomputern deutlich abweichen:
- kompakte, leichte Bauart mit gesicherten Anschlusskontakten,
- ausreichender Speicherplatz für die im Rahmen der Arbeiten notwendige Dokumentation wie Montageanweisungen, Stücklisten, Prüfkriterien, Bauteilnummern-Datenbank etc.
- Stoßfestigkeit, keine beweglichen Teile,
- Bedienbarkeit über Spezialtastatur (Beschreibung siehe unten),
- Ausfallsicherer Anschluss aller möglichen Kommunikations-, Analyse und Bedienungskomponenten wie Bedienungstastatur, vorzugsweise in Tragegurt integriert, sowie aller weiteren in Entwicklung befindlichen sowie zukünftigen mobilen Kommunikations-, Bedienungs-, Mess- und Analysegeräte.

Mit dem Computer 31 sind ein multimediales System 34 und ein Untersuchungssystem 37, das ebenfalls vergrößert in Figur 1 dargestellt ist, verbunden.

Das multimediale System 34 weist zumindest eins der folgenden Elemente auf: Mikrophon und Kopfhörer 39, Datenbrille mit Head-up-Display 38.
Durch eine vorzugsweise vorhandene Kamera in dem Head-up-Display 38 verfolgen die Mitarbeiter 4', 4", ... simultan die Aktionen des Monteurs 11.
Über das Mikrophon 39 und Kopfhörer 39 ist der Monteur auch ständig in Kontakt mit dem Kompetenzzentrum 3.

Diese Spezialbrillenkombination kann in einem handelsüblichen Montage-Schutzhelm oder auch in einer speziellen Haube integriert werden, falls der Schutzhelm bei engen Platzverhältnissen vor Ort nicht getragen werden kann. Das Computerdisplay ist in die Spezialbrille 38 integriert und ist auf die Sehschärfe des Bearbeiters einstellbar (fokussierbar). Über Bewegung des Auges kann sowohl die Umgebung als auch der Computerbildschirm oder ggf. beides wahrgenommen werden.

Das Untersuchungssystem 37 weist zumindest eins der folgenden Systeme auf: Fotokamera 40, Boroskop 41, Videokamera 42, Infrarotkamera 43 und/oder Lichtquelle. Weitere Untersuchungsgeräte oder Behandlungsgeräte wie Laser sind denkbar.

Alle Informationen wie Bilder, Filme können direkt an das Kompetenzzentrum 3 weitergeleitet werden und/oder auch auf dem Computer 31 generell oder nach Vorgabe des Monteurs 11 im Computer 31 gespeichert werden.

Ebenso können die Bilder vor Ort von dem Monteur 11 bearbeitet werden, in dem der bestimmte Stellen im Bild markiert oder einen Text oder Sprachbegleitung zu einem Film hinzufügt, der dann erst so oder wie auch immer bearbeitet, an das Kompetenzzentrum 3 weitergeleitet wird.

Ebenso kann das Kompetenzzentrum 3 dem Monteur 11 technische Unterlagen zuschieben, die er 11 auf dem Computer 31 speichert und/oder die er 11 sich auf dem Bildschirm/Head-up-Display 38 anschauen kann.

Der Computer 31 wird vorzugsweise, aber nicht zwingend, in einer stoßgeschützte Umhängetasche am Körper getragen. Die Verkabelung wird vorzugsweise, aber nicht zwingend, in die Umschnallriemen oder Tragegurte integriert.

Da mit dem Gerät 31, 34, 37 auch in schwer zugänglichen Räumen wie Gasturbinenbrennkammern gearbeitet werden soll, ist die gesamte Ausrüstung so ausgestaltet, dass sich keine Teile loslösen und in unzugängliche Bereiche der Maschine fallen können (Einsatztauglichkeit für rotierende Maschinen). Um dem Monteur 11 vor Ort 25 die besten Vorraussetzungen zu geben, sich sowohl festzuhalten als auch zu arbeiten und dabei auch die Kommunikation nach Außen aufrechtzuerhalten, sind besondere Anforderungen an die Bedientastatur des Rechners gestellt. Hierzu ist eine einfach zu bedienende Einhandbedienung vorgesehen, die vorzugsweise in die Tragegurtkonstruktion des Rechners integriert ist, aber auch zukünftig über Sprache oder andere innovative Bedientechniken erfolgen kann.

Die Vorrichtung 1 ermöglicht dem Monteur 11 vor Ort 19, 25, mittels eines tragbaren Computer 31 direkt Kontakt mit einem Experten 4', 4" aufzunehmen und schwierige Situationen ohne Verzögerung 1 in Echtzeit zu klären. Dazu stellt die Vorrichtung 1 neben einer Sprechverbindung eine Reihe weiterer Kommunikationsmöglichkeiten zur Verfügung. Der Monteur 11 kann beispielsweise Befundaufnahmen in Form von Videosequenzen oder hochauflösenden Einzelbildern an den Experten 4', 4" senden. Der Experte 4', 4" seinerseits kann Datenblätter oder benötigte Dokumente schicken, die dem Monteur 11 angezeigt werden. Insbesondere hat der Mitarbeiter 4', 4" die Möglichkeit, diese Dokumente oder die empfangenen Befundaufnahmen vor dem Versenden mit Annotationen zu versehen, was die Kommunikation erheblich vereinfacht.
Bei der Realisierung dieses Systems für den praktischen Einsatz ist die Umsetzung einer Vielzahl von Anforderungen nötig. Das System vor Ort ist:
- robust genug für den industriellen Einsatz
- kann ohne großen Schulungsaufwand eingesetzt werden und ist soweit möglich, sprachunabhängig
- setzt keinerlei Infrastrukur (außer Stromversorgung) voraus
- überträgt die Daten verschlüsselt und
- ist in möglichst viele Länder exportierbar.

Um diese zentralen Anforderungen zu erfüllen, ist die Vorrichtung 1 in drei Subsysteme aufgeteilt.

Das Back-Office-System wird vom Mitarbeiter 4', 4" genutzt, um mit dem Monteur 11 vor Ort 19, 25 zu kommunizieren.
Das Infrastruktur-System befindet sich vor Ort 19, 25 in der Nähe des Monteurs 11 und stellt ihm die notwendigen technischen Kommunikationskänale zur Verfügung.
Der Monteur 11 selbst nutzt hauptsächlich das Mobile-System (31, 34, 37), das er während der Arbeiten trägt.

Eine der zentralen Anforderungen bei der Entwicklung der Vorrichtung 1 war es, unabhängig von der vor Ort 19, 25 verfügbaren Infrastruktur zu sein. Aus diesem Grund wurde das Infrastruktur-System erstellt, das vor Ort 19, 25 die benötigten Kommunikationskanäle bereitstellt.
Für die Kommunikation mit dem mobilen System 31, 34, 37 des Monteurs 11 wird vorzugsweise für die Datenübertragung eine WLAN-Verbindung bereitgestellt, für die Sprachkommunikation vorzugsweise eine separate DECT-Verbindung. Die Anbindung an das Internet und damit letztendlich an den Mitarbeiter 4', 4" erfolgt vorzugsweise durch ein integriertes Satellitenmodem. Alle Teile des Infrastruktur-Systems sind in ein Transport-Rack integriert und vorzugsweise über eine einheitliche Schnittstelle (z.B. mit einer zentralen Mehrbereichsstromversorgung mit Überspannungsschutz) zu bedienen. Außerdem wird für den Transport das Mobile-System komplett im Rack verstaut.
Das mobile System 31, 34, 37 wird vom Monteur 11 vor Ort während der Arbeit getragen und wurde speziell für die Anforderungen der Vorrichtung 1 entwickelt. Dazu wurde in eine speziell angefertigte Tasche ein tragbarer Computer 31 inklusive kompletter Verkabelung der Peripheriegeräte integriert. Als Monitor dient vorzugsweise ein industrietaugliches Head-up-Display 38, das vorzugsweise am Helm befestigt ist. Zur Befundaufnahme können zwei unterschiedliche Kamerasysteme verwendet werden. Eine einfache Kamera am Helm ermöglicht die Übertragung von Videos, während eine hochauflösende Kamera, die bei Nichtnutzung in der Tasche untergebracht ist, detaillierte Befundaufnahmen erlaubt. Für die komplette Bedienung des Systems wird vorzugsweise keinerlei Maus oder Computertastatur benötigt. Stattdessen werden für die jeweiligen Funktionen separate spezialisierte Tasten verwendet.

Das Back-Office-System dient dem Mitarbeiter 4', 4" zur Unterstützung des Monteurs 11 vor Ort. Hier wurde als technische Basis vorzugsweise ein Tablet-PC ausgewählt, da er mit dem Stift zur Interaktion insbesondere die Erstellung von Annotationen auf eine besonders intuitive Weise ermöglicht. Mit dem Back-Office-System kann der Mitarbeiter 4', 4" Befundaufnahmen vom Techniker empfangen, vorhandene Dokumente einladen, Annotationen vornehmen (bei Dokumenten und Befundaufnahmen) und diese an den Techniker schicken. Zusätzlich kann er kurze Textnachrichten und eine Reihe einfacher Symbole versenden.

Einige Beispiele zur Anwendung der beschriebenen Vorrichtung 1:
Beispiel 1: Unterstützung eines Technikers vor Ort.

Der Monteur 11 vor Ort 19, 25 ist mit Teilen der oben beschriebenen Vorrichtung 1 ausgestattet. Mit einer Kamera 40, 42 kann er sowohl Videosequenzen als auch einzelne hochauflösende Bilder von interessierenden Anlagenteilen aufnehmen. Diese werden in Quasi-Echtzeit via Satellitenverbindung an einen oder mehrere weltweit verstreute Experten 4', 4" weitergeleitet und können von diesen mit entsprechenden schriftlichen Kommentaren (Annotationen) versehen zurückgesandt werden oder auch mündlich kommentiert werden. Weiterhin können die Experten 4', 4" Anweisungen für den weiteren Arbeitsverlauf geben, wodurch die Arbeit des Monteurs 1 vor Ort 19, 25 deutlich unterstützt werden kann. Alle aufgenommenen bzw. empfangenen Daten und Bilder werden über die Datenbrille am Helm des Monteurs 11 direkt in sein Sehfeld projiziert.

Beispiel 2: Inspektion von Bauteilen mit Freigabe für deren weitere Verwendung.

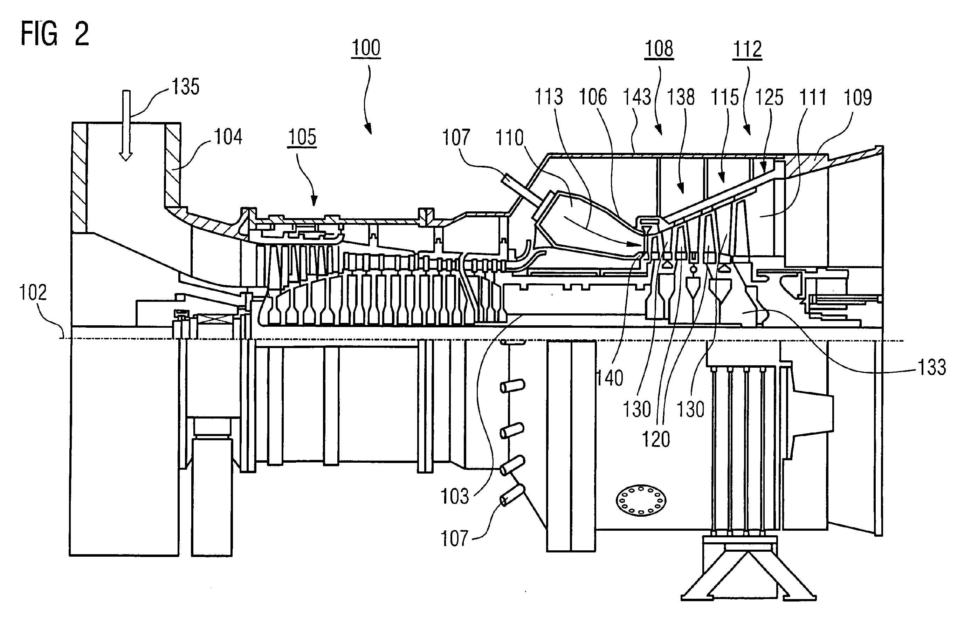

Keramische Hitzeschilde (Kacheln) in Brennkammern von stationären Gasturbinen 100 (Fig. 2) müssen aufgrund der Wechselbeanspruchung periodisch inspiziert werden. Jedoch muss nicht bei jedem festgestellten Riss die Kachel ausgetauscht werden, was zeitaufwändig und kostenintensiv ist. Es existieren je nach Einbauort und Lage der Risse kritische Rissgrößen, unterhalb der die Hitzeschildkachel nicht ausgetauscht zu werden braucht. Wegen dem hohen Risikopotenzial von sich lösenden Kacheln für die stromab befindlichen Turbinenschaufeln 120, 130 bedarf es hier speziell ausgebildeter Experten4', 4", die Entscheidung für oder gegen einen Austausch zu treffen. Da nur wenige Experten 4', 4" weltweit vorhanden sind, ergeben sich häufig personelle Engpässe oder zeitliche Verzögerungen für diese Inspektionen. Durch das neue interaktive Kommunikations-, Dokumentations- und Unterstützungssystem 1 lassen sich diese Inspektionen und speziell die Entscheidung, welche Kacheln ausgetauscht werden müssen, mit diesem innovativen System deutlich rationeller durchführen. Wegen der metallischen Gehäuse der Turbinen 100 ist hier eine flexible Drahtverbindung (auch ggf. als optische Faserverbindung zum Datentransfer) vom Arbeitsort bis zu einem Terminalpunkt außerhalb der Maschine notwendig, von dem ab dann die Weiterversendung der Daten/Information per Funk erfolgen kann.

Weitere Anwendungen sind Soll/Ist-Vergleich von Maschinenkomponenten, Bauteilidentifizierung/Dokumentation von Bauteilaustauschaktionen, Vermessung, Datenbank-Input direkt an der Maschine ohne fehlerträchtiges manuelles Zwischen-Protokollieren in Papierlisten oder Notizzetteln zum Beispiel beim Austausch von Turbinenschaufeln 120, 130.

Mit der beschriebenen Infrastruktur und der zugehörigen Ausrüstung ist es somit möglich, kritische Einsätze vor Ort 19, 25 durch Spezialisten 4', 4" direkt online zu begleiten, anzuleiten oder auch zu entscheiden, ob Teile noch den Anforderungen genügen oder ausgetauscht werden müssen. Die Vorrichtung 1 unterscheidet sich von anderen Anwendungen, wie zum Beispiel im militärischen Bereich dadurch, dass es speziell für den Einsatz in metallisch ausgeführten Umschließungen wie Turbinengehäusen, Dampferzeugertrommeln etc. ausgelegt ist, wo herkömmliche drahtlose Systeme nicht einsetzbar sind. Die Konstruktion des Computers 31 und der weiteren Ausrüstung ist speziell auf den Einsatz in diesen Apparaten und Maschinen 25 zugeschnitten.

Die Figur 2 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrA1X; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrA1X kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Vorrichtung (1)
zur multimedialen Unterstützung von einem Monteur (11) bei Montagen in oder an einer technischen Anlage (19, 25), insbesondere für Inspektions-, Wartungs- und Reparatureinsätze,
die (1) zumindest aufweist:
zumindest ein stationäres Kompetenzzentrum (3) in der Welt (22),
in dem (3) zumindest ein Mitarbeiter (4', 4") arbeitet,
eine globale Verbindung (5) zwischen dem zumindest einen Kompetenzzentrum (3) und einem Haupt-Transmitter/Receiver (7) nahe oder in der technischen Anlage (19, 25),
eine erste lokale Verbindung zwischen dem Haupt-Transmitter/Receiver (7) und einem tragbaren Computer (31)
oder
eine erste Lokalverbindung (10) zwischen dem Haupt-Transmitter/Receiver (7) und einem Lokal-Transmitter/Receiver (13), der (13) näher an der zu wartenden technischen Anlage (25) angeordnet ist und eine zweite Lokalverbindung (28) zwischen dem Lokal-Transmitter/Receiver (13) und einem tragbaren Computer (31),
wobei die Vorrichtung (1) zumindest weiterhin aufweist:
ein multimediales System (31, 34),
ein Untersuchungssystem (31, 37),
die (31, 34, 37) von dem Monteur (11) in der technischen Anlage (19, 25) getragen und benutzt werden können.

2. Vorrichtung nach Anspruch 1,
bei dem die globale Verbindung (5) über Satellit, Internet oder Telefonverbindungen erfolgt, insbesondere über Satellit.

3. Vorrichtung nach Anspruch 1 der 2,
bei dem die erste Lokalverbindung (10) zwischen dem Haupt-Transmitter/Receiver (7) und dem Lokal-Transmitter/Receiver (13) durch eine Wirelessverbindung (10) erfolgt.

4. Vorrichtung nach Anspruch 1 oder 2,
bei dem der Haupt-Transmitter/Receiver (7) direkt mit dem Computer (31) verbunden ist.

5. Vorrichtung nach Anspruch 1, 2, 3 oder 4,
bei dem die zweite Lokalverbindung (28) zwischen dem Lokal-Transmitter/Receiver (13) und dem Computer (31) oder zwischen dem Haupt-Transmitter/Receiver (7) und dem Computer (31) durch ein Kabel erfolgt.

6. Vorrichtung nach Anspruch 1, 2, 3, 4 oder 5,
bei dem eine Barriere,
insbesondere eine metallische Barriere (16),
zwischen dem Haupt-Transmitter/Receiver (7) oder
dem Lokal-Transmitter/Receiver (13) und dem Computer (31) vorhanden ist.

7. Vorrichtung nach Anspruch 1, 2, 3, 4, 5 oder 6,
bei dem ein multimediales System (34),
das von dem Monteur (11) vor Ort (25) benutzt werden kann, mit dem Computer (31) verbunden ist.

8. Vorrichtung nach Anspruch 1, 2, 3, 4, 5, 6 oder 7, bei dem das multimediale System (34) zumindest eines der folgenden Elemente aufweist:
ein Mikrophon und Kopfhörer (39), ein Head-Up-Display (38), insbesondere mit Kamera.

9. Vorrichtung nach Anspruch 1, 2, 3, 4, 5, 6, 7 oder 8, bei dem das Untersuchungssystem (37) zumindest eines der folgenden Elemente aufweist:
eine Fotokamera (40), ein Boroskop (41), eine Videokamera (42), eine Infrarotkamera (43) und/oder eine Lichtquelle.

10. Vorrichtung nach Anspruch 1, 2, 3, 4, 5 oder 6,
bei dem der Haupt-Transmitter/Receiver (7) mobil ist.

11. Vorrichtung nach Anspruch 1, 2, 3, 4, 5, 6 oder 10, die nur einen Haupt-Transmitter/Receiver (7) vor Ort (19) aufweist.

12. Vorrichtung nach Anspruch 1, 2, 3, 4, 5, 6, 7, 10 oder 11,
die nur einem Lokal-Transmitter/Receiver (13) vor Ort (19) aufweist.

13. Vorrichtung nach einem oder mehreren der vorherigen Ansprüche,
bei der von dem Kompetenzzentrum (3) zu dem Untersuchungssystem (37),
insbesondere zu der Kamera (40) oder zu der Videokamera (42) eine direkte Verbindung besteht,
so dass Videos oder Aufnahmen im Kompetenzzentrum (3) direkt verfolgt werden können.

14. Vorrichtung nach einem oder mehreren der vorherigen Ansprüche,
bei dem von dem Kompetenzzentrum (3) zu dem multimedialen System (34),
insbesondere zu dem Kopfhörer und zu dem Mikrofon (39) und/oder zu dem Head-up-Display (38) und/oder zu der Kamera eine direkte Verbindung besteht,
so dass die Sicht und Handlungen des Monteurs (11) im Kompetenzzentrum (3) direkt verfolgt werden können.

15. Verfahren zur Montage einer Anlage,
bei dem ein Monteur (11) im Bereich einer Anlage (25) in Kommunikation mit Fachleuten in einem entfernten Kompetenzzentrum (3) steht,
insbesondere mittels einer Vorrichtung nach Anspruch 1 bis 14.

16. Verfahren nach Anspruch 15,
bei dem der Monteur (11) Aufnahmen von der Anlage (25) macht,
die in seinem Computer (31) gespeichert werden und/oder an das Kompetenzzentrum (3) geschickt werden.

17. Verfahren nach Anspruch 15 oder 16
bei dem die Aufnahme von der Anlage (25) von dem Monteur (11) elektronisch markiert und dann an das Kompetenzzentrum (3) verschickt wird.

18. Verfahren nach Anspruch 15, 16 oder 17,
bei dem die Mitarbeiter (4', 4") dem Monteur (11) je nach Bedarf technische Unterlagen auf den Computer (31) oder zur Ansicht schicken.
